# EUROPEAN PATENT APPLICATION

(11) **EP 2 160 946 A1**
(43) Date of publication of application: **10.03.2010**
(21) Application number: 08163923.9
(22) Date of filing: 09.09.2008
(51) Int. Cl.: A01N 59/16, A01N 59/20, A01N 25/04, A01N 25/10, A01N 25/26, A01N 25/30, A01N 25/34, A01P 1/00, B01D 69/02, C02F 1/50

(54) **Process for the preparation of an antimicrobial article**

(71) Applicant: Polymers CRC Limited, Notting Hill, VIC 3168 (AU)
(72) Inventor: Ramaswamy, Arun, Prasath, Coimbatore 641020, Tamil Nadu (IN); Stenzel, Martina, H., Pagewood NSW 2035 (AU)
(74) Representative: Upschulte, Manfred Alois

(57) **Abstract**

The instant invention relates to a specific process for the preparation of an antimicrobial article. The antimicrobial article exhibits controlled biocidal effectiveness through the ability to tailor the antimicrobial properties of the article.

## Description

The instant invention relates to a specific process for the preparation of an antimicrobial article. The antimicrobial article exhibits controlled biocidal effectiveness through the ability to tailor the antimicrobial properties of the article.

It is known that polymers and plastics, e.g. when used as coatings on substrates can suffer from bacterial or algal decay if routinely exposed to water, dampness or moisture. Biofilms of communities of bacteria and algae can settle on the surfaces of these substrates and increase the speed of decay and/or loss of efficacy. The use of certain organic antimicrobials in air filter systems has already been proposed; US-A-2003-038074 teaches incorporation of a non-metallic antimicrobial agent such as 2,4,4'-trichloro-2'-hydroxy diphenyl ether into semi-permeable membranes. Also US Pat. No. 5102547 discloses a semi-permeable polymeric membrane in which unmodified metals such as silver, copper and antimony are incorporated into a polymer. US Pat. No. 6652751 teaches attachment of bacteriostatic metal ions to a surface of a preformed polymeric membrane by static adsorption/absorption or mixing the metal salt into polymeric solution and casting into a bath containing a reducing agent.

For example, silver is a well-known bactericide that possesses antibacterial properties for a broad spectrum of bacterial strains and is relatively non-toxic to human cells. Silver has previously been incorporated in polymer materials, such as membranes, foams and fabrics, and used in various applications where antimicrobial activity is desired, such as in water treatment and biomedical applications.

However, one problem encountered with antimicrobial materials containing, for example, silver is that silver leaches out from the material over time, leading to reduced biocidal effectiveness of the material. Moreover, the loss of silver generally does not occur in a controlled manner. As a result, there is little or no control over the biocidal activity of the antimicrobial material.

Another problem associated with silver particles that are dispersed in polymeric materials is aggregation of the particles in the materials, leading to an uneven distribution of the silver particles in the polymer material. The aggregates are difficult to break up and may compromise the biocidal efficiency of the material in which the silver particles have been dispersed. Electrostatic interactions between the silver particles are thought to contribute to the aggregation.

The inventors have developed a process for the preparation of an antimicrobial article having controlled biocidal properties. The process of the invention uses an amphiphilic copolymer in the formation of the antimicrobial article. An antimicrobial article would typically comprise a substrate and bacteriostatic or biocidal metal particles dispersed in the substrate. The inventors have shown that when bacteriostatic or biocidal metal particles are formed *in situ* in the presence of an amphiphilic copolymer during preparation of the antimicrobial article, an improved antimicrobial article can be obtained.

It has been found that the undesirable leaching of metal particles (e.g. silver) from the resulting antimicrobial article (e.g. antimicrobial membrane) can be reduced. The amphiphilic copolymer interacts with both the metal particles and the substrate of the antimicrobial article and serves to bind the metal particles in the substrate material. This in turn, helps to reduce undesirable loss of the metal particles and improves the biocidal efficacy of the antimicrobial article.

The amphiphilic copolymer may also help to control the release of metal (e.g. silver) ions from the substrate and thus provide avenues to control the biocidal activity of the antimicrobial article. In some cases, the amphiphilic copolymer may also immobilise the silver particle or any antimicrobial metal or agent in the substrate in such a way the antimicrobial article can also be contact active materials.

The inventors have further found that variations in the processing conditions used to form the antimicrobial article may have an influence on the antimicrobial activity of the metal particles and hence that of the ensuing article. For example, variations in reaction conditions, the molecular weight and composition of the amphiphilic copolymer and/or the ratio of metal precursor to copolymer may each have an influence on the size and/or shape of the metal particles. Literature reports suggest that silver particles of different size and shape may exhibit differences in antimicrobial activity (Applied and Environmental Microbiology, 2007, 73(6), 1712-1720). This may provide an additional level of control over the biocidal activity of the antimicrobial article.

In one aspect the present invention provides a process for preparing an antimicrobial article comprising the steps of:
(i) providing a mixture comprising a substrate material, an amphiphilic copolymer and a precursor of a metal particle;
(ii) reacting the precursor under conditions allowing formation of the metal particle in situ in the mixture; and
(iii) forming an antimicrobial article from the mixture.

The substrate may be comprised of any suitable material and is not particularly limited. The choice of substrate material may be dictated by the desired application in which the antimicrobial article is to be employed.

For example the substrate is a natural or synthetic polymer.

For instance the substrate is a thermoplastic or crosslinked polymer, preferably a thermoplastic polymer.

Examples of suitable polymers are given below.
1. Polymers of monoolefins and diolefins, for example polypropylene, polyisobutylene, po-lybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or polym-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimides, polyesterimides, polyhydantoins and polybenzimidazoles.
18. Polyesters derived from dicarboxylic acids and diols and/or from hydroxycarboxylic acids or the corresponding lactones or lactides, for example polyethylene terephthalate, polybutylene terephthalate, poly-1,4-dimethylolcyclohexane terephthalate, polyalkylene naphthalate and polyhydroxybenzoates as well as copolyether esters derived from hydroxyl-terminated polyethers, and also polyesters modified with polycarbonates or MBS. Copolyesters may comprise, for example - but are not limited to - polybutylenesuccinate/terephtalate, polybuty-leneadipate/terephthalate, polytetramethyleneadipate/terephthalate, polybutylensuccinate/- adipate, polybutylensuccinate/carbonate, poly-3-hydroxybutyrate/octanoate copolymer, poly-3-hydroxybutyrate/hexanoate/decanoate terpolymer. Furthermore, aliphatic polyesters may comprise, for example - but are not limited to - the class of poly(hydroxyalkanoates), in particular, poly(propiolactone), poly(butyrolactone), poly(pivalolactone), poly(valerolactone) and poly(caprolactone), polyethylenesuccinate, polypropylenesuccinate, polybutylenesuccinate, polyhexamethylenesuccinate, polyethyleneadipate, polypropyleneadipate, polybutyleneadi-pate, polyhexamethyleneadipate, polyethyleneoxalate, polypropyleneoxalate, polybutylene-oxalate, polyhexamethyleneoxalate, polyethylenesebacate, polypropylenesebacate, polybutylenesebacate and polylactic acid (PLA) as well as corresponding polyesters modified with polycarbonates or MBS. The term "polylactic acid (PLA)" designates a homo-polymer of preferably poly-L-lactide and any of its blends or alloys with other polymers; a co-polymer of lactic acid or lactide with other monomers, such as hydroxy-carboxylic acids, like for example glycolic acid, 3-hydroxy-butyric acid, 4-hydroxy-butyric acid, 4-hydroxy-valeric acid, 5-hydroxy-valeric acid, 6-hydroxy-caproic acid and cyclic forms thereof; the terms "lactic acid" or "lactide" include L-lactic acid, D-lactic acid, mixtures and dimers thereof, i.e. L-lactide, D-lactide, meso-lacide and any mixtures thereof.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

In a specific embodiment the substrate is a hydrophobic thermoplastic polymeric material.

In one embodiment the substrate material is suitable for forming a polymeric membrane. Examples of suitable substrate materials include polysulfone, polyethersulfone, polyvinylidene fluoride, poly(tetrafluoroethene), polyamide, polyurethane, polystyrene, polyalkylene (e.g. polypropylene), polycarbonate, poly(alkylene carbonate)s, polyarylene, poly(aryl ether ketones), poly(aryl substituted), polyether, polyamide, polycellulose and polycellulose with functional groups, such as carboxyl, amine, nitrile, hydroxyl, cyano, ether or thiol groups.

The metal particles formed in the process of the invention comprise at least one metal having bacteriostatic or biocidal activity. Preferably the metal particles comprise at least one metal selected from the group consisting of gold (Au), silver (Ag), copper (Cu), zinc (Zn), titanium (Ti), palladium (Pd), platinum (Pt), iron (Fe), zirconium (Zr) or an oxide thereof.

Preferably the metal particles are silver.

Metal particles comprising composites of antimicrobially active metals and metal oxides may also be prepared *in situ.* The metal particles preferably have a particle size in the range of from about 5-1000 nm, more preferably in the range of from about 5-500 nm. In a preferred embodiment the antimicrobial article comprises silver nanoparticles.

The elemental silver may be micro scaled or may be nano scaled. Nano scaled antibacterial silver is disclosed for example in U.S. Pat. No. 6,822,034, the relevant disclosure of which is hereby incorporated by reference. Nanosilver usually has mean particle sizes from the range 5 to 500 nm; minor amounts of the silver in this material may be in the form of silver oxide.

The metal particles may be of different size and shape. The size and/or shape may be dictated by the amphiphilic copolymer/polymer and the processing conditions used to form the metal particles. For example, reaction conditions (including temperature and solvent conditions), the molecular weight and composition of the amphiphilic copolymer/polymer and/or the ratio of metal precursor to copolymer/polymer may each influence the resulting metal particle size and/or shape.

Any suitable precursor that is capable of forming bacteristatic or biocidal metal particles may be employed in the process of the invention. In one embodiment the precursor is a metal salt. Preferably, the precursor is a corresponding metal salt of any one of the aforementioned bacteriostatic or biocidal metals. In one embodiment the metal particles are silver particles and the precursor is a silver salt such as silver nitrate, silver trifluoro methane sulfonate or silver tetrafluoroborate or any silver salts that can form silver metal by any means.

In one embodiment the precursor is reduced to form the metal particles. The precursor may be reduced using chemical, thermal, radiation, ultrasonic, electrochemical or microwave techniques. Preferably the precursor is reacted with a reducing agent under appropriate conditions to form the metal particles. Examples of suitable reducing agents include dimethylformamide (DMF), sodium borohydride (NaBH₄) and hydrazine. When reducing agents are used, the quantity of reducing agent employed in the process will typically be sufficient to form an effective amount of metal particles. A preferred reducing agent is DMF but not limited.

The reaction of the precursor may be performed in a solvent. In one embodiment the solvent may also act as a reducing agent for the metal particle precursor. An example of a solvent that may act as a reducing agent is dimethylformamide (DMF). In one embodiment the precursor is reduced by substrate materials (example polyethersulfone or any substrate which can reduce the precursor) and/or the any amphiphilic copolymer and/or the progens (example polyethylene glycol 400 or any higher molecular weight polyalkylene glycols can be used) or combination of substrate, amphiphilic copolymer, progens, solvent and other chemicals which can reduce the precursor.

In a specific embodiment the precursor is reduced by substrate materials (example polyethersulfone or any substrate which can reduce the precursor) and/or the any amphiphilic copolymer and/or the progens (example polyethylene glycol 400 or any higher molecular weight polyalkylene glycols can be used) or combination of substrate, amphiphilic copolymer, progens, solvent and other chemicals which can reduce the precursor.

For example the precursor of the metal particle is present in an amount from between 0.01% to 50% by weight, based on the weight of the substrate material.

The amphiphilic copolymer used in the process of the invention typically comprises a first portion adapted to interact with the metal particles and a second portion adapted to interact with the substrate. In one embodiment, the first portion of the amphiphilic copolymer is hydrophilic and the second portion of the amphiphilic copolymer is hydrophobic. It is an advantage of the invention that the amphiphilic copolymer binds the metal particles formed in the process to the substrate material and thereby helps to reduce leaching of the metal particles from the ensuing antimicrobial article. In one embodiment from about 0.1% to 75% amphiphilic copolymer is employed in the process of the invention

For example the amphiphilic copolymer is a diblock or comb copolymer wherein the first portion is hydrophilic and the second portion is hydrophobic. The amphiphilic copolymer can have any value of HLB of about 1 to about 20.

It is an advantage of the invention that the amphiphilic copolymer binds the metal particles to the substrate and thereby helps to reduce leaching of the metal particles.

It is preferred that the hydrophilic portion of the amphiphilic copolymer be capable of interacting with the metal particles though mechanisms including ionic or electrostatic bonds, complexation and encapsulation.

In one embodiment, the hydrophilic portion of the amphiphilic copolymer comprises a moiety that interacts with the metal particle.

Suitable moieties include electronegative moieties and ligands capable of interacting with the metal particle.

For example the hydrophilic portion is derived from a monomer comprising a carbonyl or amino or amide or pyridyl or nitrile or hydroxyl or cyano, or urethanes or ether or thiol or any acid functional group or any electronegative moieties containing monomers or any ligands containing monomers which can have capable of interacting with metal.

Moieties containing functional groups, such as carbonyl, amino, pyridyl, nitrile, hydroxyl, cyano, urethanes, ether and thiol are preferred. In one preferred embodiment, the hydrophilic portion is derived from a monomer comprising an amide or acid group.

Examples of such monomers include dimethylacrylamide, isopropylacrylamide, vinyl pyridine, acrylic acid and maleic acid. Any suitable hydrophilic polymerisable monomer can form the hydrophilic portion of the amphiphilic copolymer. The functional polymerisable monomers may be acrylic acid, acrylamide, dimethyl amino alkyl acrylamide, methacrylic acid, vinyl acetate, vinyl pyrrolidinone, vinyl pyridinium bromide, sodium 4-styrene sulfonate2-hydroxyethyl methacrylate, glycidyl methacrylate, 2-acrylamidoglycolic acid, 3-sulfopropyl methacrylate, 2-acrylamido-2-methyl-1-1-propane sulfonic acid, 2-dimethyl amino-ethyl methacrylate, 2-trimethylammonium-ethyl methacrylate chloride, tributyl (4-vinyl- benzylphos-phonium salts, N, N, Dimethyl-N-methylacryloxyethyl-N-(3-sulfopropyl), butyl methacrylate, PEG-methacrylate, N-isopropylacrylamide, methacryloyloxyl ethyl phosphorylcholine, poly(oxyethylene methacrylate), vinylbenzyl tetramethylene sulfonium tetrafluoroborate, titanium trialkoxide methacrylates, fluorinated functional PEG, polymerisable surfactants, any polymerisable oligomers.

In one embodiment, the hydrophilic portion is derived from at least one monomer selected from the group consisting of isopropylacrylamide and acrylic acid.

In one embodiment the amphiphilic copolymer comprises a hydrophilic portion derived from monomers such that they may be responsive to changes in temperature, pH, solvent conditions or ionic strength, thereby providing routes to smart antimicrobial materials in which the release of the metal particle can be controlled in response to such stimuli.

The hydrophobic portion of the amphiphilic copolymer is not particularly limited as any hydrophobic moiety that is compatible with, and capable of interacting with, the substrate may be employed. The composition of the hydrophobic portion will, to some degree, be dictated by the choice of substrate desired for the antimicrobial article. In one embodiment the hydrophobic portion is derived from a monomer comprising an aromatic group. As such, the hydrophobic portion therefore comprises at least one and preferably, a plurality of aromatic groups.

In one preference the hydrophobic portion is comprised of polyethersulfone, polysulfone, or poly(styrene).

The amphiphilic copolymer may be of any structure or architecture, including block, comb, brush, hyperbranched, dendritic and random copolymer structures and any combination thereof. In one preference, the amphiphilic copolymer is a block copolymer, such as a diblock, tri-block or a comb copolymer. As used herein, the term "block copolymer" refers to a polymer which is made up of two or more covalently polymeric segments, wherein at least one polymeric segment is different in composition to at least one other polymeric segment. For example, polystyrene-block-polyNIPAM (N-isopropylacrylamide (NIPAM)) is a block copolymer because it consists of a segment of polystyrene covalently linked to a segment of poly(NIPAM).

The amphiphilic copolymer may also be of any suitable molecular weight. The molecular weight of the amphiphilic copolymer is preferably at least about 1000, more preferably between 10,000 to 50,000, even more preferably between 50,000 to 100,000 and most preferably between 100,000 to 1000,000. Higher molecular weights may be preferred in some instances as this can help to reduce the leaching of the metal particles even further. The relative proportions (or ratio) of the first and second portions of the amphiphilic copolymer may be of any value. For example, the amphiphilic copolymer may comprise 10% of the first (preferably hydrophilic) portion with the remaining 90% of the copolymer being comprised of the second (preferably hydrophobic) portion. It is preferred that the ratio of the first portion to the second portion of the amphiphilic copolymer be in the range of 1:0.10 to 0.10:1, more preferably 1:0.25 to 0.25:1, 1:0.5 to 0.5:1, even more preferably 1:0.75 to 0.75 to 1 and most preferably 1:1.

The amphiphilic copolymer may be prepared using any suitable technique. Preferably, the amphiphilic copolymer is prepared under controlled free radical polymerization conditions. Examples of controlled radical polymerization techniques include Reversible-Addition Fragmentation chain Transfer (RAFT) polymerization, atom transfer radical polymerization (ATRP) and nitroxide mediated polymerization techniques (NMRP). Controlled free radial conditions may help to produce amphiphilic copolymers of defined structure, composition and/or molecular weight.

Under the term RAFT there is understood reversible addition fragmentation chain transfer polymerization (RAFT), which is a well known controlled free radical polymerization technique and for example described in WO 98/01478, WO98/58974, WO 99/31144, WO 99/05099, WO 02/094887, WO 02/26836, WO 01/42312, WO 00/75207, and WO 99/35177.

Under the term ATRP there is understood atom transfer radical polymerization (ATRP). This type of controlled free radical polymerization is, for example, described in WO 96/30421. Under the term NMRP there is understood nitroxyl mediated radical polymerization, a free radical polymerization process by controlled or "living" growth of polymer chains, which produces defined oligomeric homopolymers and copolymers, including block and graft copolymers. In U.S. 4,581,429 disclosed is the use of initiators of the partial formula R'R"NO-X. In the polymerization process the free radical species R'R"N-O• and •X are generated. •X is a free radical group, e.g. a tert.-butyl or cyanoisopropyl radical, capable of polymerizing monomer units containing ethylene groups.

A variation of the above process is disclosed in US 5 322 912 wherein the combined use of a free radical initiator and a stable free radical agent of the basic structure R'R"N-O• for the synthesis of homopolymers and block copolymers is described.

In the process of the invention typically from about 0.5 to 75 wt% of the amphiphilic copolymer and from about 0.01 to 50 wt % of metal particles, both based on the weight of the substrate polymer, are used.

In one embodiment the amphiphilic copolymer covers at least a portion of the surface of each metal particle. Preferably, the amphiphilic copolymer substantially surrounds the metal particles and more preferably, the amphiphilic copolymer encapsulates the metal particles. In another embodiment the amphiphilic copolymer and the metal particles may together form composite particle that is dispersed in the substrate. In another aspect the present invention provides an antimicrobial article comprising a substrate and a composite particle comprising a metal particle and an amphiphilic copolymer dispersed in the substrate.

The antimicrobial article prepared in the process of the invention may be of any form. In one embodiment the antimicrobial article is a membrane. Antimicrobial membranes may be used in water treatment or other applications where biofouling can occur.

It is another advantage that the *in situ* formation of metal particles enables a range of antimicrobial articles having different properties to be obtained. It is believed that processing conditions, such as reaction conditions (including temperature and solvent conditions), the molecular weight and composition of the amphiphilic copolymer and/or the ratio of metal precursor to copolymer can influence the size and/or shape of the resulting metal particles.

The inventors have shown that silver particles with polyhedral shapes or various shapes such as spherical, triangular, cube, hexagonal, octahedral, rod can be prepared when silver nitrate is reduced in the presence of the copolymer PS-b-PIPAAm. Metal particles of different size and shapes may, in turn, possess different antimicrobial activity.

Furthermore, *in situ* formation of the metal particles in the antimicrobial article enables the metal nanoparticles to not only become dispersed on the surface of the article, but also within the structure of the article. It is a further advantage of the invention that the process is a one-step method that enables a range of articles having different bacteriostatic or biocidal activity to be prepared.

The following examples illustrate the invention.

### Example 1: In situ silver particles in membrane

### 1.1 In situ preparation of silver particles in PES membrane in the presence of amphiphilic copolymers using N-Methylpyrrolidone as solvent

Silver containing antimicrobial membrane is prepared by typical non-solvent phase inversion method in one step. Polystyrene-b-polyisopropylacrylamide (780mg, 5 wt% to PES) and polyethersulfone (14.5 gm) are dissolved in N-Methylpyrrolidone (NMP) (46 gm) at 60 °C. Polyethylene glycol-400 (34.8 gm) is added to the above viscous solution and stirred to obtaining homogeneous solution. Silver nitrate (288 mg, 2 wt% to PES) dissolved in 5 gm of DMF is added drop wise to the above homogeneous solution and stirred at 60 °C for up to 4 hr. UV-vis spectra of the formed silver particle in the system is clearly showed an absorbance of silver particle at around 415 nm. The casting solution is left overnight to allow complete release of bubbles. The solution is cast onto a glass plate with a steel Gardner knife at a wet thickness of 200 µm and immersed in a coagulation bath of milli-Q water. The formed membrane is peeled off and subsequently rinsed with copious amount of water to remove solvents and other organic residues. From the representative FESEM images, it is observed that the size of silver particles are between 50-300nm and fairly distributed in the membranes surface as well as inside of the membranes. Some aggregations of silver particles on the surface as well as in the porous of the membranes are also observed.

### 1.2 In situ preparation of silver particles in PES membrane in the presence of amphiphilic copolymers using dimethylformamide as solvent cum reducing agent

Silver containing antimicrobial membrane is prepared by typical non-solvent phase inversion method in one step. Polystyrene-b-polydimethylacrylamide or polystyrene-b-polyacrylic acid or polystyrene-b-poly (isopropylacrylamide) or polyvinyl pyrrolidone (5 wt% to polyethersulfone, PES) and polyethersulfone (14 g) are dissolved in dimethylformamide (DMF) (45 g) at 60 °C. Polyethylene glycol-400 (34 g) is added to the above viscous solution and stirred to obtaining homogeneous solution. Silver nitrate (144 mg, 1 wt% to PES) dissolved in 5 g of DMF is added drop wise to the above homogeneous solution and stirred at 60 °C for 30 minutes. The casting solutions are left overnight to allow complete release of bubbles. The solution is cast onto a glass plate with a steel Gardner knife at a wet thickness of 200 µm and immersed in a coagulation bath of milli-Q water. The formed membranes are peeled off and subsequently rinsed with copious amount of water to remove solvents and other organic residues. Membranes are examined by SEM and tested for its silver leaching. From FESEM images, it is observed that the size of silver particles are between 50-300nm and fairly distributed in the membranes surface as well as inside of the membranes. Some aggregations of silver particles on the surface as well as in the porous of the membranes are also observed. Different shape of silver particles, such as spherical, square and triangle are seen in the membranes.

### 1.3 Leaching test

Leaching test is performed by suspending the membrane (3x3 cm) in 500 ml of Milli-Q water at room temperature. After specific period, 5 ml of sample is taken from the bottle and added 2 drops of *50*/*50* (v/v) nitric acid/Mili-Q water to stabilize the silver and analyzed using ICP-MS. It is observed that the significant silver leaching for the membrane containing Hygate (obtained from CIBA Inc.) and PVP homopolymer (hydrophilic homopolymer) than the membrane containing polystyrene-co-polydimethylacrylamide diblock copolymer (hydrophobic and hydrophilic block). The results indicates that the less leaching of silver for the membrane containing copolymer could be due to the insoluble nature of diblock copolymer in water, also the hydrophobic block is relatively compatible to the hydrophobic.

**Table 1: Silver leaching in ppb range from the PES membranes containing copolymer and 1wt% silver**

| Time | 24 hr | 48 hr | 72 hr | 96 hr | 216 hr | 288 hr | 384 hr |
|---|---|---|---|---|---|---|---|
| PES-5wt%PSbPDMA-120K-1wt%Ag | 2.34 | 4.16 | 4.93 | 4.76 | 3.56 | 4.77 | 4.59 |
| PES-5wt%PSbPDMA-40K-1wt%Ag | 3.98 | 6.44 | 7.00 | 7.06 | 6.62 | 5.48 | 7.38 |
| PES-5wt%PVP-1wt%Ag | 5.71 | 15.83 | 17.01 | 17.42 | 18.98 | 19.58 | 18.83 |

**Table 2: Silver leaching in ppb range from the PES membranes containing 1wt% Hygate**

| Time | 17 hr | 21 hr | 41 hr | 48 hr | 137 hr | 185 hr | 400 hr |
|---|---|---|---|---|---|---|---|
| PES-1wt%Hygate | 29.61 | 28.93 | 33.20 | 33.17 | 44.07 | 45.65 | 46.66 |

It is noted that there is relatively less leaching of silver in the membranes containing higher molar mass (-120K) polystyrene-co-polydimethylacrylamide than in the membrane containing lower molar mass (-40K) copolymers. The significant leaching of silver form the membrane containing Hygate could be due to the weak interaction (less compatible) between silver containing Hygate and the membrane. Significant leaching of silver from PVP homopolymer could be due to water soluble PVP, though they have high affinity to silver particles (possible both PVP and silver leaches out quickly).

## Claims

1. A process for preparing an antimicrobial article comprising the steps of:
(i) providing a mixture comprising a substrate material, an amphiphilic copolymer and a precursor of a metal particle;
(ii) reacting the precursor under conditions allowing formation of the metal particle in situ in the mixture; and
(iii) forming an antimicrobial article from the mixture.

2. A process according to claim 1 wherein the substrate is a thermoplastic or crosslinked polymer.

3. A process according to claim 1 wherein the substrate is a hydrophobic thermoplastic polymer.

4. A process wherein the metal particles formed comprise at least one metal selected from the group consisting of gold, silver, copper, zinc, titanium, palladium, platinum, iron, zirconium or an oxide thereof.

5. A process according to claim 4 wherein the metal particles formed are silver.

6. A process according to claim 1 wherein the precursor of the metal particle is a metal salt.

7. A process according to claim 1 wherein the reaction of the precursor of the metal particle is a reduction of a metal salt.

8. A process according to claim 1 wherein the precursor of the metal particle is present in an amount from between 0.01% to 50% by weight, based on the weight of the substrate material.

9. A process according to claim 1 wherein, the amphiphilic copolymer is a diblock or comb copolymer wherein the first portion is hydrophilic and the second portion is hydrophobic.

10. A process according to claim 1 wherein, the amphiphilic copolymer comprises a hydrophilic portion derived from monomers such that they may be responsive to changes in temperature, pH, solvent conditions or ionic strength, thereby providing routes to smart antimicrobial materials in which the release of the metal particle can be controlled in response to such stimuli.

11. A process according to claim 1 wherein the hydrophilic portion is derived from a monomer comprising an carbonyl or amino or amide or pyridyl or nitrile or hydroxyl or cyano, or urethanes or ether or thiol or any acid functional group or any electronegative moieties containing monomers or any ligands containing monomers which can have capable of interacting with metal.

12. A process according to claim 1 wherein the precursor is reduced by substrate materials and/or the amphiphilic copolymer.

13. A process according to claim 1 wherein the hydrophobic portion is derived from a monomer with at least one aromatic group.

14. A process according to claim 1 wherein the first portion to the second portion of the amphiphilic copolymer be in the range of 1:0.10 to 0.10:1

15. A process according to claim 1 wherein from about 0.5 to 75 wt% of the amphiphilic copolymer and from about 0.01 to 50 wt % of metal particles, based on the weight of the substrate polymer, are used.
